# EUROPEAN PATENT APPLICATION

(11) **EP 4 848 381 A1**
(43) Date of publication of application: **02.12.2026**
(21) Application number: 24919640.3
(22) Date of filing: 21.06.2024
(51) Int. Cl.: H01M 4/86, H01M 4/88, H01M 8/18

(54) **CONDUCTIVE SLURRY AND PREPARATION METHOD THEREFOR, COMPOSITE ELECTRODE, AND FLOW BATTERY**

(30) Priority: 23.01.2024 CN 202410095308
(71) Applicant: VRB Energy Inc., Grand Cayman (GB)
(72) Inventor: ZHAO, Zhiling, Beijing 101100 (CN); ZHOU, Xingsheng, Beijing 101100 (CN); MA, Hedi, Beijing 101100 (CN); LIU, Huichao, Beijing 101100 (CN); GE, Qiming, Beijing 101100 (CN)
(74) Representative: Ricker, Mathias
(86) International application number: PCT/CN2024/100677
(87) International publication number: WO 2025/156556

(57) **Abstract**

The present application relates to a conductive paste, a preparation method therefor, a composite electrode, and a flow battery. The conductive paste is prepared from conductive carbon black, carbon nanotubes, polyvinylidene fluoride, and N-methylpyrrolidone. The composite electrode comprises a first electrode, a bipolar plate, a second electrode, and the conductive paste described above, the conductive paste being disposed between the first electrode and the bipolar plate, and being disposed between the second electrode and the bipolar plate. The conductive paste of the present disclosure is not only stable in an initial chemical state of a common flow battery vanadium electrolyte, but is also electrochemically stable during charging and discharging of the flow battery under an applied voltage. The conductive paste has a long life, and will not degrade during the use of the battery. The conductive paste not only has a good bonding effect, leading to reduced contact resistance after combining the bipolar plate with the carbon felt electrodes, but also the conductive paste itself has good electrocatalytic activity, providing reaction sites for the vanadium electrolyte commonly used in the flow battery, thereby improving battery efficiency and performance.

## Description

### RELATED APPLICATIONS

This application claims priority to Chinese Patent Application No. 202410095308.2, filed January 23, 2024, and titled CONDUCTIVE PASTE, PREPARATION METHOD THEREFOR, COMPOSITE ELECTRODE, AND FLOW BATTERY, which is incorporated herein by reference in its entirety.

### TECHNICAL FIELD

The present application relates to the technical field of batteries, and in particular to a conductive paste, a preparation method therefor, a composite electrode, and a flow battery.

### BACKGROUND

With the increase in renewable clean energy generation, attention has been increasingly paid to the demands for energy storage by industry. Moreover, at present, energy storage technologies are thriving and contending with each other. Various technologies, ranging from the well-known pumped storage based on physical principles to lithium battery energy storage systems based on electrochemistry, are playing their respective roles in different application scenarios. The flow battery is one of the energy storage technologies based on electrochemistry. It mainly consists of energy storage electrolyte substances and a cell stack, which are separated from each other, and is characterized by the separation of capacity and power. This characteristic dictates the intrinsic safety of flow batteries, which are beginning to be favored by users in practical applications.

As demand for flow batteries in energy storage projects is growing explosively and the upstream industrial chain thereof is forming progressively, the market requirements for the performance and production capacity of the cell stacks of flow batteries have risen to a new level. The main components of the cell stack of the flow battery include an exchange membrane, a bipolar plate, and electrodes, which are generally arranged in a stacked configuration within the cell stack. Carbon felt, which is a porous carbon material, is commonly used as the material of the electrodes, and a flexible graphite plate, which is water-impermeable, is commonly used as the bipolar plate. Research has found that a simple stacked structure of the carbon felt and the bipolar plate has contact resistance that forms at a gap therebetween, which reduces the charging and discharging efficiency of the cell stack, thereby affecting its performance. Therefore, in the flow battery industry, the carbon felt and the bipolar plate are generally bonded together physically or chemically to form a composite electrode. The formation of the composite electrode also reduces the number of steps in the manufacturing assembly process of the cell stack and increases the manufacturer's production capacity.

Among composite electrode technologies that have been reported, a number of them used the idea of preparing a resin bipolar plate and a composite electrode thereof de novo, as in, for example, patent application 1 - CN102738479A, patent application 2 - CN102569824A, patent application 3 - CN207993964U, patent 4 - CN102891324B, and patent 5 - CN113809339B. These technologies involve the manufacturing process of the bipolar plate, which increases the workload in forming the composite electrode. In addition, patent application 1 through patent application 3 all use a method for hot-pressing a pure plastic resin, which is sandwiched between electrodes, thus increasing the resistance value. In patent 4, a self-made bipolar plate/skeleton layer is a resin-filled electrode material. In order to fix same to an outer electrode, it is also necessary to perform hot pressing after adding a conductive agent therein. In patent 5, an organic solvent is added to the surface of a prepared bipolar plate and an electric current is passed therethrough, such that the bipolar plate and carbon felt are adhered to each other by means of a change at the interface of the bipolar plate resulting from the heat generated by the electricity. Whether mechanical hot pressing, or pressing by means of heat generated by passing an electric current, these processes damage the surface of the bipolar plate and affect the stability thereof.

### SUMMARY

A summary of the subject matter to be described in detail herein is presented below. This summary is not intended to limit the scope of the present application.

The present application provides a conductive paste, a preparation method therefor, a composite electrode, and a flow battery. The conductive paste provided by the present application allows for combining a bipolar plate with electrodes using as small a force as possible. The conductive paste of the present application adheres well to the surface of the bipolar plate, and the bipolar plate will not detach under the flushing of a liquid at a high flow rate. In addition, the conductive paste of the present application is characterized by strong resistance to chemical corrosion and to electrochemical corrosion, and is stable in different charging and discharging states of the electrolytes of the flow battery. The bonding of the conductive paste not only reduces the contact resistance between the electrodes and the bipolar plate, but also offers excellent electrocatalytic activity, which is beneficial to the electrochemical reaction efficiencies of the electrolytes of the flow battery, thereby improving battery performance. The composite electrode of the present application uses as main components carbon felt electrodes and a bipolar plate that are common on the market. The conductive paste is prepared by using a short process, and the bipolar plate and the carbon felt electrodes are combined together under common temperatures and pressures, without damaging the surface of the bipolar plate. The formula of the conductive paste of the present disclosure is not only stable in an initial chemical state of a common flow battery vanadium electrolyte, but is also electrochemically stable during charging and discharging of the flow battery under an applied voltage. The conductive paste has a long life, and will not degrade during the use of the battery. The conductive paste of the present application not only has a good bonding effect, leading to reduced contact resistance after combining the bipolar plate with the carbon felt electrodes, but also the conductive paste itself has good electrocatalytic activity, providing reaction sites for the vanadium electrolyte commonly used in the flow battery, thereby improving battery efficiency and performance.

In one aspect, the present application provides a conductive paste, the conductive paste being prepared from conductive carbon black, carbon nanotubes, polyvinylidene fluoride, and N-methylpyrrolidone.

In an embodiment of the present application, the mass ratio of the conductive carbon black, polyvinylidene fluoride, and carbon nanotubes is 1:1:0.84 to 1.1:1:0.93.

In an embodiment of the present application, the ratio of the conductive carbon black, carbon nanotubes, and polyvinylidene fluoride as solids to the N-methylpyrrolidone as a solvent is 0.1 kg/L to 0.2 kg/L; or
the mass ratio of the conductive carbon black, polyvinylidene fluoride, and carbon nanotubes is 1.08:1:0.9, and the ratio of the conductive carbon black, carbon nanotubes, and polyvinylidene fluoride as solids to the N-methylpyrrolidone as a solvent is 0.17 kg/L; or
the mass ratio of the conductive carbon black, polyvinylidene fluoride, and carbon nanotubes is 1:1:0.84, and the ratio of the conductive carbon black, carbon nanotubes, and polyvinylidene fluoride as solids to the N-methylpyrrolidone as a solvent is 0.17 kg/L; or
the mass ratio of the conductive carbon black, polyvinylidene fluoride, and carbon nanotubes is 1.1:1:0.93, and the ratio of the conductive carbon black, carbon nanotubes, and polyvinylidene fluoride as solids to the N-methylpyrrolidone as a solvent is 0.17 kg/L; or
the mass ratio of the conductive carbon black, polyvinylidene fluoride, and carbon nanotubes is 1.08:1:0.9, and the ratio of the conductive carbon black, carbon nanotubes, and polyvinylidene fluoride as solids to the N-methylpyrrolidone as a solvent is 0.1 kg/L; or
the mass ratio of the conductive carbon black, polyvinylidene fluoride, and carbon nanotubes is 1.08:1:0.9, and the ratio of the conductive carbon black, carbon nanotubes, and polyvinylidene fluoride as solids to the N-methylpyrrolidone as a solvent is 0.2 kg/L.

In another aspect, the present application provides a method for preparing the conductive paste described above, the method comprising the following steps:
1) placing conductive carbon black and polyvinylidene fluoride in a mortar and grinding same until no white particles are evidently present in the powder, then transferring the mixture to a stirring tank of a vacuum stirrer, and injecting half of a usage amount of an N-methylpyrrolidone solvent;
2) placing carbon nanotubes in another container, adding the remaining amount of the N-methylpyrrolidone and uniformly stirring, and then transferring the mixture to the stirring tank of the same vacuum stirrer; and
3) allowing the stirrer to stir at 500 RPM to 700 RPM for 30 min to 60 min, then stir at 100 RPM to 300 RPM for 30 min to 60 min in a vacuumizing state, and finally stir at 200 RPM to 400 RPM for 5 h to 10 h to obtain the conductive paste.

In an embodiment of the present application, the mass ratio of the conductive carbon black, polyvinylidene fluoride, and carbon nanotubes is 1:1:0.84 to 1.1:1:0.93.

In an embodiment of the present application, the ratio of the conductive carbon black, carbon nanotubes, and polyvinylidene fluoride as solids to the N-methylpyrrolidone as a solvent is 0.1 kg/L to 0.2 kg/L; or
the mass ratio of the conductive carbon black, polyvinylidene fluoride, and carbon nanotubes is 1.08:1:0.9, and the ratio of the conductive carbon black, carbon nanotubes, and polyvinylidene fluoride as solids to the N-methylpyrrolidone as a solvent is 0.17 kg/L; or
the mass ratio of the conductive carbon black, polyvinylidene fluoride, and carbon nanotubes is 1:1:0.84, and the ratio of the conductive carbon black, carbon nanotubes, and polyvinylidene fluoride as solids to the N-methylpyrrolidone as a solvent is 0.17 kg/L; or
the mass ratio of the conductive carbon black, polyvinylidene fluoride, and carbon nanotubes is 1.1:1:0.93, and the ratio of the conductive carbon black, carbon nanotubes, and polyvinylidene fluoride as solids to the N-methylpyrrolidone as a solvent is 0.17 kg/L; or
the mass ratio of the conductive carbon black, polyvinylidene fluoride, and carbon nanotubes is 1.08:1:0.9, and the ratio of the conductive carbon black, carbon nanotubes, and polyvinylidene fluoride as solids to the N-methylpyrrolidone as a solvent is 0.1 kg/L.

The mass ratio of the conductive carbon black, polyvinylidene fluoride, and carbon nanotubes is 1.08:1:0.9, and the ratio of the conductive carbon black, carbon nanotubes, and polyvinylidene fluoride as solids to the N-methylpyrrolidone as a solvent is 0.2 kg/L.

In yet another aspect, the present application provides a composite electrode, the composite electrode comprising a first electrode, a bipolar plate, a second electrode, and the conductive paste described above or the conductive paste prepared by the method described above, wherein the conductive paste is disposed between the first electrode and the bipolar plate, and is disposed between the second electrode and the bipolar plate.

In an embodiment of the present application, the first electrode and the second electrode are carbon felt.

In an embodiment of the present application, the material of the bipolar plate is flexible carbon.

In yet another aspect, the present application provides a flow battery, the flow battery comprising the composite electrode described above.

The present application has the following beneficial effects:
1. The formula of the conductive paste of the present disclosure is not only stable in an initial chemical state of a common flow battery vanadium electrolyte, but is also electrochemically stable during charging and discharging of the flow battery under an applied voltage. The conductive paste has a long life, and will not degrade during the use of the battery.
2. The conductive paste of the present application not only has a good bonding effect, leading to reduced contact resistance after combining the bipolar plate with the carbon felt electrodes, but also the conductive paste itself has good electrocatalytic activity, providing reaction sites for the vanadium electrolyte commonly used in the flow battery, thereby improving battery efficiency and performance.
3. The composite electrode of the present application uses as main components carbon felt electrodes and a bipolar plate that are common on the market. The conductive paste is prepared by using a short process, and the bipolar plate and the carbon felt are combined together under common temperatures and pressures, without damaging the surface of the bipolar plate.

Other features and advantages of the present application will be set forth in the following description, and in part will become apparent from the description, or may be understood by means of the implementation of the present application. Other advantages of the present application will be achieved and attained by means of the solutions described in the description.

### BRIEF DESCRIPTION OF THE DRAWINGS

FIG. 1 shows a schematic exploded view of a composite electrode of the present application.
FIG. 2 shows the resistance measurement results of a composite electrode according to Example 1 of the present application before and after applying the conductive paste for compositing.
FIG. 3 shows the charging and discharging curves of a flow cell of the present application at different currents.
FIG. 4 shows the changes in charging and discharging test efficiency for different composite electrode samples.
FIG. 5 shows the electrochemical stability of different formulas of paste coatings.
FIG. 6(a) shows the effect of the addition or non-addition of carbon nanotubes on the electrocatalytic activity of a flow battery electrolyte, and FIG. 6(b) shows the effect of the amount of carbon nanotubes added on the electrocatalytic activity of the flow battery electrolyte.
FIG. 7 shows a comparison of the performance of a battery in which the composite electrode of the present application is used with that of a battery in which the composite electrode of the present application is not used.
   1 - first electrode; 2 - bipolar plate; 3 - second electrode; 4 - conductive paste

### DETAILED DESCRIPTION

In order to render the objects, technical solutions, and advantages of the present application clearer, examples of the present application will be described in detail below. It should be noted that, in the case of no conflict, the examples in the present application and the features in the examples may be arbitrarily combined with each other.

An example of the present application provides a conductive paste, the conductive paste being prepared from conductive carbon black, carbon nanotubes, polyvinylidene fluoride, and N-methylpyrrolidone.

In an example of the present application, the mass ratio of the conductive carbon black, polyvinylidene fluoride, and carbon nanotubes is 1:1:0.84 to 1.1:1:0.93.

In an example of the present application, the ratio of the conductive carbon black, carbon nanotubes, and polyvinylidene fluoride as solids to the N-methylpyrrolidone as a solvent is 0.1 kg/L to 0.2 kg/L; or
the mass ratio of the conductive carbon black, polyvinylidene fluoride, and carbon nanotubes is 1.08:1:0.9, and the ratio of the conductive carbon black, carbon nanotubes, and polyvinylidene fluoride as solids to the N-methylpyrrolidone as a solvent is 0.17 kg/L; or
the mass ratio of the conductive carbon black, polyvinylidene fluoride, and carbon nanotubes is 1:1:0.84, and the ratio of the conductive carbon black, carbon nanotubes, and polyvinylidene fluoride as solids to the N-methylpyrrolidone as a solvent is 0.17 kg/L; or
the mass ratio of the conductive carbon black, polyvinylidene fluoride, and carbon nanotubes is 1.1:1:0.93, and the ratio of the conductive carbon black, carbon nanotubes, and polyvinylidene fluoride as solids to the N-methylpyrrolidone as a solvent is 0.17 kg/L; or
the mass ratio of the conductive carbon black, polyvinylidene fluoride, and carbon nanotubes is 1.08:1:0.9, and the ratio of the conductive carbon black, carbon nanotubes, and polyvinylidene fluoride as solids to the N-methylpyrrolidone as a solvent is 0.1 kg/L; or
the mass ratio of the conductive carbon black, polyvinylidene fluoride, and carbon nanotubes is 1.08:1:0.9, and the ratio of the conductive carbon black, carbon nanotubes, and polyvinylidene fluoride as solids to the N-methylpyrrolidone as a solvent is 0.2 kg/L.

An example of the present disclosure further provides a method for preparing the conductive paste described above, the method including the following steps:
1) placing conductive carbon black and polyvinylidene fluoride in a mortar and grinding same until no white particles are evidently present in the powder, then transferring the mixture to a stirring tank of a vacuum stirrer, and injecting half of a usage amount of an N-methylpyrrolidone solvent;
2) placing carbon nanotubes in another container, adding the remaining amount of the N-methylpyrrolidone and uniformly stirring, and then transferring the mixture to the stirring tank of the same vacuum stirrer; and
3) allowing the stirrer to stir at 500 RPM to 700 RPM for 30 min to 60 min, then stir at 100 RPM to 300 RPM for 30 min to 60 min in a vacuumizing state, and finally stir at 200 RPM to 400 RPM for 5 h to 10 h to obtain the conductive paste.

In an example of the present application, the mass ratio of the conductive carbon black, polyvinylidene fluoride, and carbon nanotubes is 1:1:0.84 to 1.1:1:0.93.

In an example of the present application, the ratio of the conductive carbon black, carbon nanotubes, and polyvinylidene fluoride as solids to the N-methylpyrrolidone as a solvent is 0.1 kg/L to 0.2 kg/L; or
the mass ratio of the conductive carbon black, polyvinylidene fluoride, and carbon nanotubes is 1.08:1:0.9, and the ratio of the conductive carbon black, carbon nanotubes, and polyvinylidene fluoride as solids to the N-methylpyrrolidone as a solvent is 0.17 kg/L; or
the mass ratio of the conductive carbon black, polyvinylidene fluoride, and carbon nanotubes is 1:1:0.84, and the ratio of the conductive carbon black, carbon nanotubes, and polyvinylidene fluoride as solids to the N-methylpyrrolidone as a solvent is 0.17 kg/L; or
the mass ratio of the conductive carbon black, polyvinylidene fluoride, and carbon nanotubes is 1.1:1:0.93, and the ratio of the conductive carbon black, carbon nanotubes, and polyvinylidene fluoride as solids to the N-methylpyrrolidone as a solvent is 0.17 kg/L; or
the mass ratio of the conductive carbon black, polyvinylidene fluoride, and carbon nanotubes is 1.08:1:0.9, and the ratio of the conductive carbon black, carbon nanotubes, and polyvinylidene fluoride as solids to the N-methylpyrrolidone as a solvent is 0.1 kg/L; or
the mass ratio of the conductive carbon black, polyvinylidene fluoride, and carbon nanotubes is 1.08:1:0.9, and the ratio of the conductive carbon black, carbon nanotubes, and polyvinylidene fluoride as solids to the N-methylpyrrolidone as a solvent is 0.2 kg/L.

An example of the present application further provides a composite electrode, the composite electrode including a first electrode, a bipolar plate, a second electrode, and the conductive paste described above or the conductive paste prepared by the method described above, wherein the conductive paste is disposed between the first electrode and the bipolar plate, and is disposed between the second electrode and the bipolar plate.

In an example of the present application, the first electrode and the second electrode are carbon felt.

In an example of the present application, the material of the bipolar plate is flexible carbon.

An example of the present application further provides a flow battery, the flow battery including the composite electrode described above.

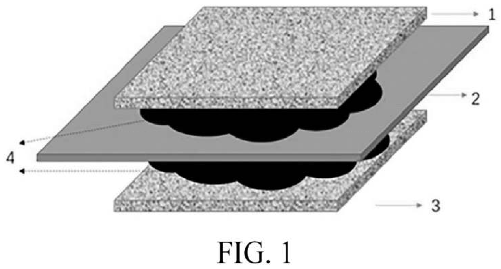

FIG. 1 shows a schematic exploded view of a composite electrode of the present application. As shown in FIG. 1, in an exemplary example of the present application, the composite electrode includes a first electrode 1, a bipolar plate 2, a second electrode 3, and the conductive paste 4 as described above, the conductive paste 4 being disposed between the first electrode 1 and the bipolar plate 2, and being disposed between the second electrode 3 and the bipolar plate 2.

In examples of the present application, the composite electrode of the present application is manufactured as follows:
Step 1: a conductive paste is prepared. The conductive paste is prepared by dissolving conductive carbon black (Super P) (Hefei Kejing), carbon nanotubes (CNTs) (5% carbon content, Harbin Jinna Technology), and polyvinylidene fluoride (PVDF) (Hefei Kejing) in N-methylpyrrolidone (NMP) (Hefei Kejing). The mass ratio of the conductive carbon black, polyvinylidene fluoride, and carbon nanotubes is 1:1:0.84 to 1.1:1:0.93, and the ratio of the conductive carbon black, carbon nanotubes, and polyvinylidene fluoride as solids to the N-methylpyrrolidone as a solvent is 0.1 kg/L to 0.2 kg/L. The specific preparation method is as follows: first, the conductive carbon black and polyvinylidene fluoride are placed in a mortar and are ground until no white particles are evidently present in the powder, then the mixture is transferred to a stirring tank of a vacuum stirrer, and half of a usage amount of the N-methylpyrrolidone solvent is injected. Then, the carbon nanotubes are placed in another container, the remaining amount of the N-methylpyrrolidone is added, and after uniformly stirring, the mixture is also transferred to the stirring tank of the vacuum stirrer. Lastly, the stirrer is allowed to initially stir at 500 RPM to 700 RPM for 30 min to 60 min, then stir at 100 RPM to 300 RPM for 30 min to 60 min in a vacuumizing state, and finally stir at 200 RPM to 400 RPM for 5 h to 10 h.

Step 2: a bipolar plate to be coated is prepared, and regions to be coated on both front and back surfaces are marked. The bipolar plate is placed on a glass plate, and a certain amount of the prepared conductive paste is placed in one marked region. A coating blade is adjusted to achieve a thickness of 0.15 mm to 0.28 mm, and coating is performed from left to right. Then, carbon felt prepared as the first electrode is overlaid on the coating, and is lightly pressed.

Step 3: the bipolar plate is turned over to perform coating on the second surface, and carbon felt as the second electrode is attached. After completion, the bipolar plate is placed in such a way that one surface thereof faces downward, and a force amounting to an intensity of pressure of 0.5 Kpa to 2 Kpa is applied to perform pressing for 13 min to 16 min. Then, the bipolar plate is turned over in such a way that the surface faces upward, and a force amounting to an intensity of pressure of 0.5 Kpa to 2 Kpa is applied to perform pressing for another 13 min to 16 min.

Step 4: the composited electrodes are placed in a vacuum drying oven and dried under vacuum at 110°C to 130°C (preferably 120°C) for 10 h to 12 h; and then further dried by using a blast drying oven for 7 h to 10 h to obtain the composite electrode.

The sources of the materials used in the Examples and Comparative Examples of the present application were as follows:
the conductive carbon black was from Hefei Kejing;
the carbon nanotubes (CNTs) were from Harbin Jinna Technology;
the polyvinylidene fluoride (PVDF) was from Hefei Kejing;
the NMP was from Kaiyin Industry;
the carbon felt was from Jiangyou Runsheng;
the bipolar plates were from Ningbo Xinyuan;
the positive and negative electrolytes were from Aladdin Reagents;
the styrene-butadiene latex was from Dongguan Donglin Polymer Material; and
the sodium carboxymethylcellulose was from Weifang Lite, Shandong.

### Example 1

The present example provided a conductive paste prepared from conductive carbon black, carbon nanotubes, polyvinylidene fluoride, and N-methylpyrrolidone, wherein the mass ratio of the conductive carbon black, polyvinylidene fluoride, and carbon nanotubes was 1.08:1:0.9, and the ratio of the conductive carbon black, carbon nanotubes, and polyvinylidene fluoride as solids to the N-methylpyrrolidone as a solvent was 0.17 kg/L.

The conductive paste of the present example was prepared by the following method:
The conductive carbon black, polyvinylidene fluoride, and carbon nanotubes were weighed in a mass ratio of 1.08:1:0.9, and the N-methylpyrrolidone was weighed such that the ratio of the conductive carbon black, carbon nanotubes, and polyvinylidene fluoride as solids to the N-methylpyrrolidone as a solvent was 0.17 kg/L. The conductive carbon black and polyvinylidene fluoride were placed in a mortar and were ground until no white particles were evidently present in the powder, then the mixture was transferred to a stirring tank of a vacuum stirrer, and half of a usage amount of the N-methylpyrrolidone solvent was injected. Then, the carbon nanotubes were placed in another container, the remaining amount of the N-methylpyrrolidone was added and uniformly stirred, and then the mixture was transferred to the stirring tank of the same vacuum stirrer. The stirrer was allowed to stir at 600 RPM for 40 min, then stir at 200 RPM for 50 min in a vacuumizing state, and finally stir at 300 RPM for 6.5 h to obtain the conductive paste.

### Example 2

The present example differed from Example 1 only in that the mass ratio of the conductive carbon black, polyvinylidene fluoride, and carbon nanotubes was 1:1:0.84.

### Example 3

The present example differed from Example 1 only in that the mass ratio of the conductive carbon black, polyvinylidene fluoride, and carbon nanotubes was 1.1:1:0.93.

### Example 4

The present example differed from Example 1 only in that the ratio of the conductive carbon black, carbon nanotubes, and polyvinylidene fluoride as solids to the N-methylpyrrolidone as a solvent was 0.1 kg/L.

### Example 5

The present example differed from Example 1 only in that the ratio of the conductive carbon black, carbon nanotubes, and polyvinylidene fluoride as solids to the N-methylpyrrolidone as a solvent was 0.2 kg/L.

### Comparative Example 1

The present comparative example differed from Example 1 only in that the mass ratio of the conductive carbon black, polyvinylidene fluoride, and carbon nanotubes was 1.3:1.5:1.2.

### Comparative Example 2

The present comparative example differed from Example 1 only in that the mass ratio of the conductive carbon black, polyvinylidene fluoride, and carbon nanotubes was 0.8:0.9:0.7.

### Comparative Example 3

The present comparative example differed from Example 1 only in that the ratio of the conductive carbon black, carbon nanotubes, and polyvinylidene fluoride as solids to the N-methylpyrrolidone as a solvent was 0.08 kg/L.

### Comparative Example 4

The present comparative example differed from Example 1 only in that the ratio of the conductive carbon black, carbon nanotubes, and polyvinylidene fluoride as solids to the N-methylpyrrolidone as a solvent was 0.21 kg/L.

### Comparative Example 5

The present comparative example provided a conductive paste prepared from conductive carbon black, polyvinylidene fluoride, and N-methylpyrrolidone, wherein the mass ratio of the conductive carbon black and polyvinylidene fluoride was 1:0.84, and the ratio of the conductive carbon black and polyvinylidene fluoride as solids to the N-methylpyrrolidone as a solvent was 0.17 kg/L.

The conductive paste of the present comparative example was prepared by the following method:
The conductive carbon black and polyvinylidene fluoride were placed in a mortar in a mass ratio of 1:0.84 and were ground for 30 minutes until no white particles were evidently present in the powder. Then the mixture was transferred to a stirring tank of a vacuum stirrer, and NMP was added such that the ratio of the conductive carbon black and polyvinylidene fluoride as solids to the N-methylpyrrolidone as a solvent was 0.17 kg/L. The stirrer was allowed to stir at 600 RPM for 40 min, then stir at 200 RPM for 50 min in a vacuumizing state, and finally stir at 300 RPM for 6.5 h to obtain the conductive paste.

### Comparative Example 6

The present comparative example differed from Example 1 only in that ethanol was used as the solvent.

### Comparative Example 7

The present comparative example differed from Example 1 only in that tetrahydrofuran was used as the solvent.

### Comparative Example 8

The present comparative example differed from Example 1 only in that n-butyl acetate was used as the solvent.

### Comparative Example 9

The paste of Comparative Example 9 was prepared by blending conductive carbon black with styrene-butadiene latex and sodium carboxymethyl cellulose in a weight ratio of 1:0.9:0.84 by using water as a solvent, wherein water was added such that the ratio of the conductive carbon black, styrene-butadiene latex, and sodium carboxymethyl cellulose as solids to water as a solvent was 0.2 kg/L.

The water-based paste was prepared as follows: the styrene-butadiene latex emulsion was placed in a container, deionized water was added for dilution, and then the mixture was magnetically stirred under vacuum for 30 min. Subsequently, the conductive carbon black and sodium carboxymethylcellulose were placed in a mortar and were ground until no white particles were evidently present in the powder, deionized water was added, and the mixture was transferred to the stirring tank containing the styrene-butadiene latex emulsion. Finally, the mixture was magnetically stirred under vacuum at 300 RPM for 12 h.

### Performance tests

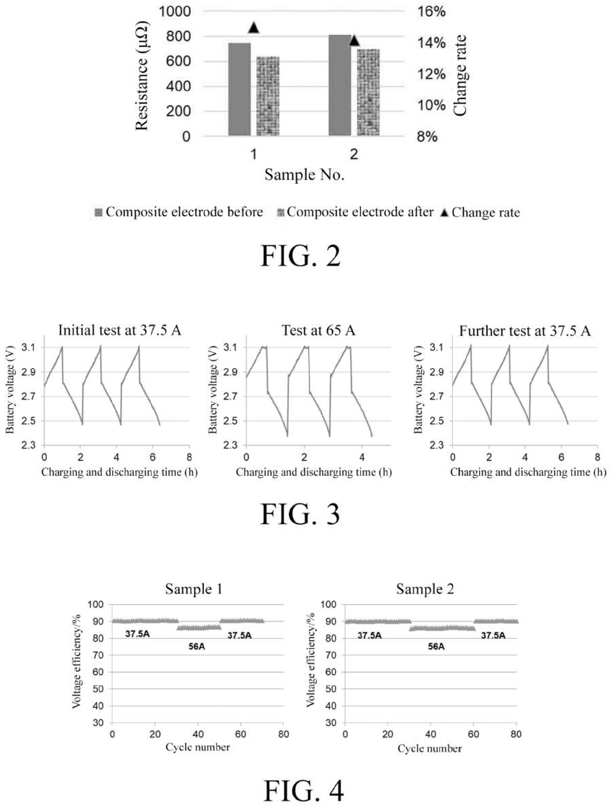

A composite electrode was prepared from the conductive paste of Example 1 as follows: a piece of cut bipolar plate having a size of 28*22 cm was prepared, and coating regions on both front and back sides (25*15 cm) were marked. The bipolar plate was placed on a glass plate, and 18 g of the conductive paste prepared in Example 1 was placed in one marked region. A coating blade was adjusted to achieve a thickness of 0.21 mm, and coating was performed from left to right. Then, prepared carbon felt having a size of 25*15 cm was overlaid on the coating, and was lightly pressed. The bipolar plate was turned over to perform coating on the second surface, and a second piece of carbon felt having the same size was attached, as shown in FIG. 1. After completion, the bipolar plate was placed in such a way that one surface thereof faced downward, and a force of 37.5 N was applied to perform pressing for 15 min. Then, the bipolar plate was turned over in such a way that the surface faced upward, and a force of 37.5 N was applied to perform pressing for another 15 min. Finally, the composited electrodes were placed in a vacuum drying oven and dried under vacuum at 120°C for 10.5 h, and then further dried by using a blast drying oven for 8 h to obtain the composite electrode. In order to verify the reproducibility of the manufacturing process, two batches of the composite electrodes were prepared, the samples of which were recorded as Sample 1 and Sample 2, respectively. A loop resistance meter was used to measure the resistance of the composite electrodes before and after applying the conductive paste for compositing, and the results are shown in FIG. 2. As shown in FIG. 2, the change reduction rate of the resistance of the composite electrodes was around 15%, and the resistance-lowering effect of the prepared composite electrodes was stable.

The performance of a flow battery using the composite electrode was tested as follows: the flow battery was assembled using the prepared composite electrode, and was subjected to charging and discharging cycles at different currents. The positive and negative electrolytes both had an initial vanadium electrolyte valence of 3.5, and the positive and negative electrolytes were both used in an amount of 0.5 L. First, a constant-current charging and discharging test was performed using a small current of 37.5 A for 30 cycles. Then, the charging and discharging current was increased to 56 A to perform a charging and discharging test for 20 to 30 cycles. Finally, the current was decreased back to 37.5 A to perform a charging and discharging test for another 20 cycles. The curves showing the change in battery voltage at different charging and discharging currents are comparatively shown in FIG. 3. It can be found that at the small current of 37.5 A, battery polarization was low, and the discharge voltage interval was maintained between 2.78 V to 2.46 V, and when the current was increased to 56 A, battery polarization was significant, and the discharge voltage interval was reduced to 2.71 V to 2.37 V. However, the change in this polarization phenomenon was reversible. When the current was returned from 56 A to 37.5 A to perform charging and discharging, the battery voltage change curve could completely return to the previous level, indicating that the composite electrode was stable in long-term multi-cycle charging and discharging. The charging and discharging performances of the batteries assembled using the composite electrodes prepared in two batches are comparatively shown in FIG. 4. The voltage efficiencies of the batteries could reach 90% when tested at the small current. After the current was increased, the voltage efficiencies decreased slightly, but were still not lower than 86%. After returning to the small current, the efficiencies could return to the initial state. The charging and discharging tests showed that the composite electrodes were stable in charging and discharging operations of the batteries, and the effects of the prepared composite electrodes were reproducible.

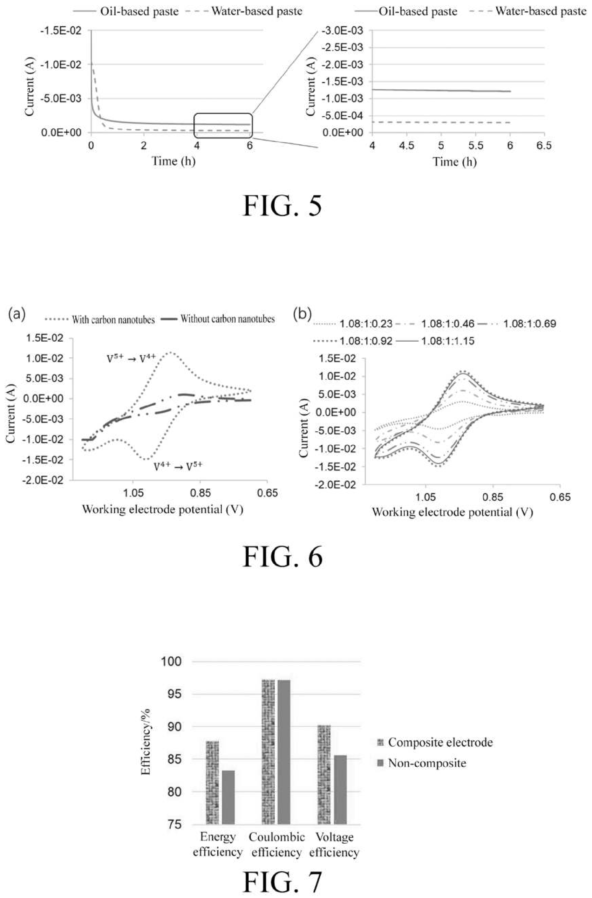

Similarly, performance tests were performed on the composite electrodes prepared from the conductive pastes of Examples 2-5 and Comparative Examples 1-9 and the flow batteries using the composite electrodes, and the results are shown in Table 1 below and FIGS. 5-7.

**Table 1**

| | Resistance before compositing (µΩ) | Resistance after compositing (µΩ) | Resistance change rate % |
|---|---|---|---|
| Example 1 | 748 | 636 | 15.0 |
| Example 2 | 741 | 664 | 10.4 |
| Example 3 | 777 | 681 | 12.4 |
| Example 4 | 811 | 697 | 14.0 |
| Example 5 | 735 | 635 | 13.6 |
| Comparative Example 1 | 845 | 794 | 6 |
| Comparative Example 2 | 873 | 820 | 6 |
| Comparative Example 3 | 720 | 688 | 4.4 |
| Comparative Example 4 | 755 | 698 | 7.5 |
| Comparative Example 5 | 633 | 601 | 5 |
| Comparative Example 6 | 783 | 753 | 3.8 |
| Comparative Example 7 | 764 | 750 | 1.83 |
| Comparative Example 8 | 818 | 770 | 5.86 |
| Comparative Example 9 | 768 | 752 | 2 |

The larger the rate of change in resistance before and after compositing, the better the formula. It can be seen from the results of Table 1 that compared with Comparative Examples 1-9, the composite electrodes prepared from the conductive pastes of Examples 1-4 of the present invention had a higher rate of change in resistance before and after compositing. Therefore, the conductive pastes of Examples 1-4 of the present invention had better performance.

As shown in FIG. 6(a), compared with the composite electrode formed using the conductive paste of Comparative Example 5 which did not include carbon nanotubes, the composite electrode formed using the conductive paste of Example 1 which included carbon nanotubes exhibited the highest oxidation and reduction current. Therefore, the conductive paste formulas of the Examples of the present application had excellent electrocatalytic activity on the electrolytes of the flow battery.

As shown in FIG. 6(b), when the mass ratio of the conductive carbon black, polyvinylidene fluoride, and carbon nanotubes was 1.08:1:0.23 to 1.08:1:0.92, the oxidation and reduction current in the test results continually improved. However, after the mass ratio of the conductive carbon black, polyvinylidene fluoride, and carbon nanotubes became more than 1.08:1:0.91, the oxidation and reduction current slightly decreased, and when preparing the paste of this sample, it was observed that the dispersibility of the carbon nanotubes began to deteriorate.

The coating method of the conductive paste of Comparative Example 9 was consistent with that of the conductive paste of Example 1. Compared with the conductive paste of Example 1, the water-based paste of Comparative Example 9 was prone to oxidation and had poor stability. An electrochemical workstation was used to subject the bipolar plate coated with the conductive paste of Comparative Example 9 to a continuous oxidation reaction at a high electric potential. The electrolyte was a vanadium electrolyte diluted to 0.1 M and having a valence of 3.5. The electric potential applied was 1 V, corresponding to the electrode potential for the positive electrode reaction of the vanadium electrolyte.

As shown in FIG. 5, in the case of the sample using the oil-based conductive paste in Example 1, within 6 h after the test current stabilized, the current decreased only slightly, and the current stabilized at about 1.2 mA. However, in the case of the sample of the water-based paste of Comparative Example 9, the current continuously decreased within the first 0.5 h along with continuous oxidation at a high electric potential, and the final current stabilized at 0.3 mA, which was only 25% of that of the sample of the oil-based conductive paste of Example 1. This result indicated that in an oxidizing environment, the water-based conductive paste was less stable and could not satisfy the operating conditions of the flow battery.

In addition, the charging and discharging performances of the battery using the composite electrode including the conductive paste of Example 1 of the present application and the battery using non-composite electrodes, in terms of three kinds of efficiency values obtained by charging and discharging at a current of 37.5 A, are comparatively shown in FIG. 7. The comparison indicated that the coulombic efficiencies of the two batteries were similar, but the voltage efficiency increased from 85.6% for non-composite electrodes to 90% for composited electrodes, and therefore the energy efficiency of the battery including the composite electrode was improved from 83% before being composited to 87.8%.

Although the embodiments of the present application have been disclosed as above, the content described concerns embodiments that are only used for the purpose of facilitating the understanding of the present application, and is not intended to limit the present application. Any person skilled in the art to which the present application pertains can make any modifications and variations to the forms and details of implementation without departing from the spirit and scope disclosed in the present application, but the scope defined by the appended claims shall apply with regard to the scope of patent protection of the present application.

## Claims

1. A conductive paste, **characterized in that** the conductive paste is prepared from conductive carbon black, carbon nanotubes, polyvinylidene fluoride, and N-methylpyrrolidone.

2. The conductive paste according to claim 1, wherein the mass ratio of the conductive carbon black, polyvinylidene fluoride, and carbon nanotubes is 1:1:0.84 to 1.1:1:0.93.

3. The conductive paste according to claim 1, wherein the ratio of the conductive carbon black, carbon nanotubes, and polyvinylidene fluoride as solids to the N-methylpyrrolidone as a solvent is 0.1 kg/L to 0.2 kg/L; or
the mass ratio of the conductive carbon black, polyvinylidene fluoride, and carbon nanotubes is 1.08:1:0.9, and the ratio of the conductive carbon black, carbon nanotubes, and polyvinylidene fluoride as solids to the N-methylpyrrolidone as a solvent is 0.17 kg/L; or
the mass ratio of the conductive carbon black, polyvinylidene fluoride, and carbon nanotubes is 1:1:0.84, and the ratio of the conductive carbon black, carbon nanotubes, and polyvinylidene fluoride as solids to the N-methylpyrrolidone as a solvent is 0.17 kg/L; or
the mass ratio of the conductive carbon black, polyvinylidene fluoride, and carbon nanotubes is 1.1:1:0.93, and the ratio of the conductive carbon black, carbon nanotubes, and polyvinylidene fluoride as solids to the N-methylpyrrolidone as a solvent is 0.17 kg/L; or
the mass ratio of the conductive carbon black, polyvinylidene fluoride, and carbon nanotubes is 1.08:1:0.9, and the ratio of the conductive carbon black, carbon nanotubes, and polyvinylidene fluoride as solids to the N-methylpyrrolidone as a solvent is 0.1 kg/L; or
the mass ratio of the conductive carbon black, polyvinylidene fluoride, and carbon nanotubes is 1.08:1:0.9, and the ratio of the conductive carbon black, carbon nanotubes, and polyvinylidene fluoride as solids to the N-methylpyrrolidone as a solvent is 0.2 kg/L.

4. A method for preparing the conductive paste according to claim 1, **characterized in that** the method comprises the following steps:
1) placing conductive carbon black and polyvinylidene fluoride in a mortar and grinding same until no white particles are evidently present in the powder, then transferring the mixture to a stirring tank of a vacuum stirrer, and injecting half of a usage amount of an N-methylpyrrolidone solvent;
2) placing carbon nanotubes in another container, adding the remaining amount of the N-methylpyrrolidone and uniformly stirring, and then transferring the mixture to the stirring tank of the same vacuum stirrer; and
3) allowing the stirrer to stir at 500 RPM to 700 RPM for 30 min to 60 min, then stir at 100 RPM to 300 RPM for 30 min to 60 min in a vacuumizing state, and finally stir at 200 RPM to 400 RPM for 5 h to 10 h to obtain the conductive paste.

5. The method according to claim 4, wherein the mass ratio of the conductive carbon black, polyvinylidene fluoride, and carbon nanotubes is 1:1:0.84 to 1.1:1:0.93.

6. The method according to claim 4, wherein the ratio of the conductive carbon black, carbon nanotubes, and polyvinylidene fluoride as solids to the N-methylpyrrolidone as a solvent is 0.1 kg/L to 0.2 kg/L; or
the mass ratio of the conductive carbon black, polyvinylidene fluoride, and carbon nanotubes is 1.08:1:0.9, and the ratio of the conductive carbon black, carbon nanotubes, and polyvinylidene fluoride as solids to the N-methylpyrrolidone as a solvent is 0.17 kg/L; or
the mass ratio of the conductive carbon black, polyvinylidene fluoride, and carbon nanotubes is 1:1:0.84, and the ratio of the conductive carbon black, carbon nanotubes, and polyvinylidene fluoride as solids to the N-methylpyrrolidone as a solvent is 0.17 kg/L; or
the mass ratio of the conductive carbon black, polyvinylidene fluoride, and carbon nanotubes is 1.1:1:0.93, and the ratio of the conductive carbon black, carbon nanotubes, and polyvinylidene fluoride as solids to the N-methylpyrrolidone as a solvent is 0.17 kg/L; or
the mass ratio of the conductive carbon black, polyvinylidene fluoride, and carbon nanotubes is 1.08:1:0.9, and the ratio of the conductive carbon black, carbon nanotubes, and polyvinylidene fluoride as solids to the N-methylpyrrolidone as a solvent is 0.1 kg/L; or
the mass ratio of the conductive carbon black, polyvinylidene fluoride, and carbon nanotubes is 1.08:1:0.9, and the ratio of the conductive carbon black, carbon nanotubes, and polyvinylidene fluoride as solids to the N-methylpyrrolidone as a solvent is 0.2 kg/L.

7. A composite electrode, **characterized in that** the composite electrode comprises a first electrode, a bipolar plate, a second electrode, and the conductive paste according to claim 1, wherein the conductive paste is disposed between the first electrode and the bipolar plate, and is disposed between the second electrode and the bipolar plate.

8. The composite electrode according to claim 7, wherein the first electrode and the second electrode are carbon felt.

9. The composite electrode according to claim 7, wherein the material of the bipolar plate is flexible carbon.

10. A flow battery, **characterized in that** the flow battery comprises the composite electrode according to claim 7.
